# EUROPÄISCHE PATENTSCHRIFT

(11) **EP 2 332 863 B1**
(45) Veröffentlichungstag und Bekanntmachung des Hinweises auf die Patenterteilung: **07.03.2012**
(21) Anmeldenummer: 10015353.5
(22) Anmeldetag: 07.12.2010
(51) Int. Cl.: B65G 47/244, B65G 47/90

(54) **Vorrichtung zum Drehen von Buchblocks, Büchern o. dgl. Druckprodukten**
Device for rotating book blocks, books or similar printed products
Dispositif destiné à tourner des blocs de livres, des livres ou des produits d'impression analogues

(30) Priorität: 12.12.2009 DE 102009058150
(43) Veröffentlichungstag der Anmeldung: 15.06.2011
(73) Patentinhaber: Kolbus GmbH & Co. KG, 32369 Rahden (DE)
(72) Erfinder: Gerke, Klaus, 27211 Bassum (DE)

(56) Entgegenhaltungen:
- DE-A1- 19 810 112
- GB-A- 1 054 937

## Beschreibung

Die Erfindung betrifft eine Vorrichtung zum Drehen von Buchblocks, Büchern o. dgl. Druckprodukten gemäß dem Oberbegriff des Anspruchs 1.

Eine Drehvorrichtung der eingangs genannten Art wird in der industriellen Buchbinderei überall dort eingesetzt, wo Buchblocks oder Bücher mit einer bestimmten Ausrichtung von einer Bearbeitungsstation zu einer nachgeordneten Bearbeitungsstation überführt werden sollen, an der eine andere Ausrichtung der Druckprodukte erforderlich bzw. zweckmäßig ist. Um beispielsweise Bücher in Stapeleinrichtungen abwechselnd um 180° gedreht aufeinander stapeln zu können, werden die Bücher je nach Ausrichtung, mit der die Bücher zugeführt werden, um 0°, 90° oder 180° gedreht.

In der DE 19810112 A1 ist eine Vorrichtung zum taktsynchronen Einschleusen von aus einer Vormaschine beliebig aufeinander folgend zugeführten Büchern in eine gattungsgemäße, die Bücher mittig erfassende Drehvorrichtung beschrieben. Die Klemm-Dreh-Einheit aus Drehteller und Dreh-Druckstempel ist zwischen zwei parallelen Förderriemen vor und zurück verfahrbar.

Bei einer bekannten, eine solche Dreheinrichtung aufweisenden Stapeleinrichtung [Kolbus DS 391] werden bei synchroner Verfahrgeschwindigkeit taktgenau eingeschleuste Bücher jeweils durch den Drehteller von den Förderriemen abgehoben und gegen den von einem Pneumatikzylinder zeitgleich nach unten bewegten Dreh-Druckstempel gedrückt, wobei durch den federnd nachgiebigen Pneumatikzylinder die Bücher kraftschlüssig eingespannt sind. Die Bücher werden um +90°, -90° oder 180° gedreht und bei ebenfalls synchroner Geschwindigkeit wieder auf den Förderriemen abgelegt. Bei Formatwechsel muss der Dreh-Druckstempel manuell zumindest soweit auf die Dicke der Bücher eingestellt werden, dass ein vom Drehteller angehobenes Buch sicher vom nach unten bewegten Dreh-Druckstempel eingespannt wird.

Aus der DE 19758732 B₄ ist eine Drehvorrichtung bekannt, bei der in der Klemmstellung der vertikale Abstand des Dreh-Druckstempels zum Drehteller durch eine Steuereinrichtung in Abhängigkeit von einer vorgegebenen Buchdicke abgestimmt ist. Der obere Dreh-Druckstempel ist dabei entsprechend der per Tastatur oder übergeordneter Steuerungseinheit vorgegebenen Buchdicke vertikal fest positioniert, während der untere Drehteller die Bücher anhebt und dagegen drückt. Wenn die tatsächliche Buchdicke von dem theoretischen Vorgabewert abweicht, kann es zu Störungen in der Zuführung der Bücher kommen, indem bspw. die Bücher gegen den Dreh-Druckstempel stoßen. Außerdem ist durch den relativ schweren Positionsantrieb für den Dreh-Druckstempel die bewegte Masse erhöht, wodurch die max. Taktleistung der Drehvorrichtung limitiert ist.

Der Erfindung liegt die Aufgabe zugrunde, eine Vorrichtung zum Drehen von Buchblocks, Büchern o. dgl. Druckprodukten gemäß dem Oberbegriff des Anspruchs 1 zu schaffen, die von einfachem Aufbau ist und eine automatische Einstellung der geöffneten Klemm-Dreh-Einheit auf eine auf die Produktdicke abgestimmte Öffnungsweite ermöglicht.

Diese Aufgabe wird erfindungsgemäß dadurch gelöst, dass zum Einspannen des Druckprodukts der Dreh-Druckstempel von einem eine definierte Druckkraft aufbringenden, ersten Antriebsmittel taktgemäß senk- und hebbar ist, und dass zur Einstellung der Produktdicke der mittels erstem Antriebsmittel abgesenkte Dreh-Druckstempel von einem zweiten Antriebsmittel gegen ein auf der Fördereinrichtung aufliegendes Referenz-Druckprodukt bewegbar ist und die sich dadurch am zweiten Antriebsmittel ergebene Antriebsstellung festsetzbar ist.

Für die Einstellung der Öffnungsweite muss keine manuell gemessene Buchdicke per Tastatur in die Steuervorrichtung eingegeben oder durch eine übergeordnete Steuerungseinheit vorgegeben werden. Die Vorrichtung stellt sich automatisch an einem Referenzprodukt auf ein auf die Produktdicke abgestimmtes Öffnungsmaß ein. Ein aufwändiger, mit Masse behafteter Verstellantrieb ist nicht erforderlich. Die Klemm-Dreh-Einheit kann dadurch besonders leicht gebaut werden mit der Möglichkeit hochdynamischer Vorund Rückbewegungen. Durch die taktgemäße Hubbewegung des Dreh-Druckstempels ist der Abstand zwischen angehobenen Dreh-Druckstempel und Transportband so groß, dass das jeweilige Druckprodukt auch mit evtl. aufstehenden Deckeln einwandfrei in die Klemm-Dreh-Einheit ein- und auslaufen kann, ohne dass Schleifmarkierungen hinterlassende Niederhalter zum Einsatz kommen müssen.

Bevorzugte Ausbildungsformen der Erfindung sind in den abhängigen Ansprüchen angegeben.

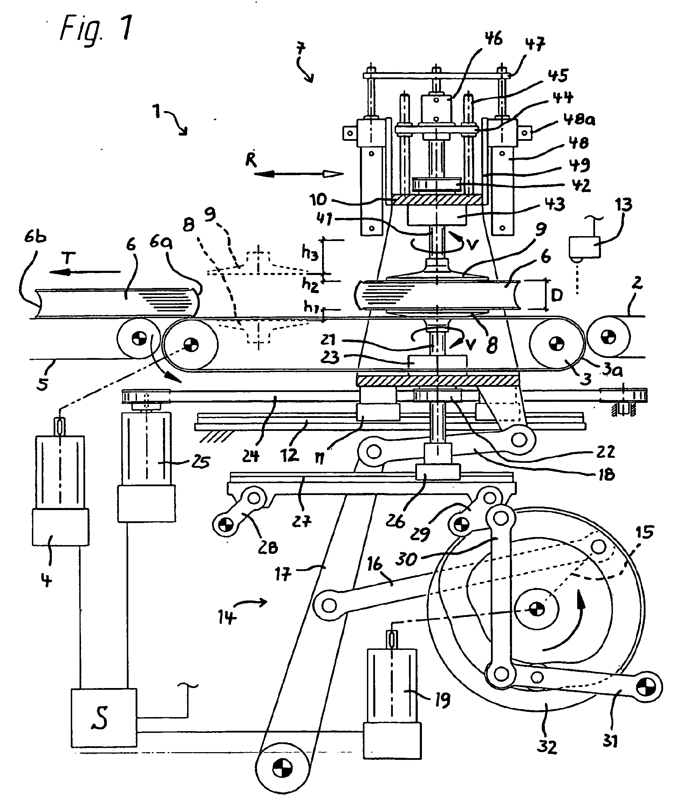

Die Merkmale der vorliegenden Erfindung werden in der folgenden Beschreibung einer bevorzugten Ausführungsform anhand der Zeichnung erläutert. Es zeigt die **Fig. 1** eine Drehvorrichtung in einer teilweise schematisierten seitlichen Schnittansicht.

Die Drehvorrichtung 1 weist eine Klemm-Dreh-Einheit 7 auf, bestehend aus einem unteren, ein flach aufliegendes Buch 6 von einer Fördereinrichtung 3 abhebenden Drehteller 8 und einem oberen, heb- und senkbaren Dreh-Druckstempel 9, zwischen denen das Buch 6 zum Drehen einspannbar ist.

Die Bücher 6 werden im Ausführungsbeispiel in ungefähr gleichen gegenseitigen Abständen mit vorlaufendem Rücken 6 a in einer Transportrichtung T von einem Zuführförderer 2 der Fördereinrichtung 3 zugeführt, ggf. um eine vertikale Achse gedreht, und abschließend an einen Wegförderer 5 übergeben, wobei nach erfolgter Drehung der Vorderschnitt 6 b voran läuft.

Die Klemm-Dreh-Einheit 7 befindet sich in einem Rahmen 10, welcher am unteren Ende mit Führungswagen 11 auf horizontalen Führungsschienen 12 verfahrbar geführt ist. Die Vor- und Rückbewegung R des Rahmens 10 wird von einer Kurbelschwinge 14 erzeugt, bestehend aus einer an einer drehangetriebenen Kurvenscheibe 32 ausgebildeten Kurbel 15, einer Koppel 16 und einer Schwinge 17, an deren Ende über eine weitere Koppel 18 der Rahmen 10 angelenkt ist.

Die Kurvenscheibe 32 ist von einem Servomotor 19 angetrieben, welcher von einer Steuerung S derart gesteuert ist, dass die Klemm-Dreh-Einheit 7 - mittig zu einem jeweiligen von einem Sensor 13 erfassten Buch 6 ausgerichtet - zumindest beim Abheben wie auch beim Ablegen des Buches 6 synchron zur Förderbewegung der von einem Asynchronmotor 4 angetriebenen Fördereinrichtung 3 vorbewegt wird. Die Bücher 6 werden also bei kontinuierlicher Förderung produktschonend von der Fördereinrichtung 3 abgehoben, gedreht und wieder auf ihr abgelegt.

Der Drehteller 8 verfährt zwischen zwei parallelen Förderriemen 3 a der Fördereinrichtung 3 und ist an einem Ende einer Keilwelle 21 befestigt, welche in einer Zahnscheibe 22 vertikal verschieblich geführt ist. Die Zahnscheibe 22 selbst ist in einem am Rahmen 10 angeordneten Lagerflansch 23 drehgelagert und über einen Zahnriemen 24 von einem ortsfest angeordneten Servomotor 25 drehantreibbar, zum wahlweisen Drehen des Buches 6 um +90°, -90° oder wie im Ausführungsbeispiel um 180°.

Die durch die Vor- und Rückbewegung R der Klemm-Dreh-Einheit 7 relativ zum ortsfest angeordneten Servomotor 25 zwangsweise erzeugte Drehbewegung am Drehteller 8 wird dabei durch eine vom Servomotor 25 überlagerte Komplementärbewegung kompensiert. Die orts- bzw. gestellfeste Anordnung des Servomotors 25 erlaubt eine extrem leichte Konstruktion der Klemm-Dreh-Einheit 7, wodurch hochdynamische Vor- und Rückbewegungen R und damit hohe Taktleistungen der Drehvorrichtung 1 ermöglicht werden.

Das Abheben des Buches 6 von der Fördereinrichtung 3 erfolgt mit einem festen Abhebehub h₁ des Drehtellers 8 von ca. 5 mm über die Förderebene. Das zweite Ende der Keilweile 21 ist in einem Führungswagen 26 drehgelagert, welcher auf einer auf und ab bewegbaren Führungsschiene 27 geführt ist. Diese ist an zwei gleich langen Lenkern 28, 29 angelenkt, wobei an dem als Doppellenker 29 ausgebildeten Lenker eine Koppel 30 angreift, welche am anderen Ende mit einem von der Kurvenscheibe 32 gesteuerten Kurvenhebel 31 verbunden ist.

Während der Vorbewegung der Klemm-Dreh-Einheit 7 wird der Drehteller 8 von der parallel zu sich selbst nach oben bewegbaren Führungsschiene 27 um den Abhebehub h₁ angehoben und zum Ende der Vorbewegung wieder abgesenkt. Während der Rückbewegung der Klemm-Dreh-Einheit 7 verbleibt der Drehteller 8 in abgesenkter Stellung. Soll ein Buch 6 ungedreht von der Fördereinrichtung 3 transportiert werden, so wird die Vor- und Rückbewegung R der Klemm-Dreh-Einheit 7 in einer Phase angehalten, in der sich der Drehteller 8 in abgesenkter Stellung unter der Förderebene der Fördereinrichtung 3 befindet, sodass das Buch 6 die Drehvorrichtung 1 ohne Einspannung in der Klemm-Dreh-Einheit 7 passiert.

Beim Drehen des in der Klemm-Dreh-Einheit 7 eingespannten Buches 6 ist der DrehDruckstempel 9 synchron zum Drehteller 8 drehangetrieben. Der Dreh-Druckstempel 9 ist wie der Drehteller 8 an einem Ende einer Keilwelle 41 befestigt, die in einer Zahnscheibe 42 vertikal verschieblich geführt ist. Die Zahnscheibe 42 ist einem Lagerflansch 43 drehgelagert und mit der unteren Zahnscheibe 22 durch nicht weiter dargestellte Mittel antriebsverbunden, sodass die Drehbewegung V sowohl vom Drehteller 8 als auch vom Dreh-Druckstempel 9 auf das Buch 6 eingeleitet wird, wodurch insb. schwere, wabbelige Bücher 6 einwandfrei gedreht werden.

Zum Einspannen eines Buches 6 wird in zeitlicher Abstimmung mit der Abhebewegung des Drehtellers 8 der Dreh-Druckstempel 9 abgesenkt. Die Keilwelle 41 ist am zweiten Ende an einem über Führungsstangen 45 vertikal verschieblichen Steg 44 drehgelagert abgestützt. Mittels eines Pneumatikzylinders 46 als erstes Antriebsmittel wird der Steg 44 und damit der Dreh-Druckstempel 9 relativ zu einem in der Höhenposition entsprechend der Buchdicke D festsetzbaren Steg 47 um einen vergleichsweise kleinen Klemmhub h₂ von 5 bis 30 mm zum Einspannen des Buches 6 abgesenkt und zur Freigabe wieder angehoben.

Der Pneumatikzylinder 46 ist federnd nachgiebig und spannt das Buch 6 kraftschlüssig ein. Der Arbeitsdruck des Pneumatikzylinders 46 ist einstellbar, um die jeweiligen Bücher 6 nur mit der jeweils für die Drehung erforderlichen Druckkraft einzuspannen. Durch die federnde Nachgiebigkeit des Pneumatikzylinders 46 ist eine Überlastfunktion gegeben.

Die Höhenposition des Stegs 47 und damit die Einstellung der Buchdicke D wird erfindungsgemäß an einem Referenz-Buch automatisch festgelegt. Eine Buchdicke D muss der Drehvorrichtung 1 nicht vorgegeben werden. Der automatische Einstellvorgang kann jederzeit wiederholt werden, um ggf. die Klemm-Dreh-Einheit 7 an schwankende Buchdicken D anzupassen. Der Einstellvorgang wird wie folgt durchgeführt:

Das Referenz-Buch, bspw. das erste einer zu verarbeitenden Serie von gleichen Büchern 6, wird zu einer Stelle im stromaufwärtigen Bereich der Fördereinrichtung 3 gefördert und unter der Klemm-Dreh-Einheit 7 positioniert, ohne dass es von dem Drehteller 8 von der Fördereinrichtung 3 abgehoben wird. Der Steg 47 ist von zwei, mit Laschen 49 am Rahmen 10 befestigten Pneumatikzylindern 48 als zweite Antriebsmittel in einer maximalen Höhenposition angehoben, während der Dreh-Druckstempel 9 vom Pneumatikzylinder 46 abgesenkt ist.

Der Dreh-Druckstempel 9 wird nun von den beiden Pneumatikzylindern 48 mit einem Stellhub h₃ abgesenkt, bis er auf das Referenz-Buch trifft. Der Gesamtarbeitsdruck der beiden Pneumatikzylinder 48 ist dabei kleiner als der Arbeitsdruck des ausgefahrenen Pneumatikzylinders 46. Die sich dadurch ergebene Höhenposition des Stegs 47 wird festgesetzt, indem die Kolbenstangen in den beiden Pneumatikzylindern 48 durch Feststelleinheiten 48 a festgeklemmt werden. Die Haltekraft in den Feststelleinheiten 48 a ist größer als der Arbeitsdruck des Pneumatikzylinders 46. So ist gewährleistet, dass beim taktgemäßen Einspannen der Bücher 6 die Höhenposition des Stegs 47 und damit die Einstellung der Buchdicke D beibehalten wird.

Die Dreheinrichtung 1 kann einer Stapeleinrichtung für Bücher 6 vorgeordnet sein, in der die Bücher 6 abwechselnd um 180° gedreht aufeinander gestapelt werden. Bei Kopf oder Fuß voran zugeführten Büchern 6 werden diese abwechselnd um +90° und -90° gedreht. Bei Vorderschnitt 6 b oder, wie im Ausführungsbeispiel, Rücken 6 a voran zugeführten Büchern 6 werden die Bücher 6 abwechselnd ungedreht und um 180° gedreht übergeben. Die Dreheinrichtung 1 kann auch in Maschinenverkettungen zum Einsatz kommen, in der Buchblocks oder Bücher 6 in einer anderen Orientierung der nächsten Verarbeitungsmaschine zugeführt werden müssen. Dann wird jedes Buch 6 in gleicher Weise gedreht.

Im Ausführungsbeispiel wird der Dreh-Druckstempel 9 von pneumatischen Antrieben taktgemäß angehoben und abgesenkt bzw. nach der Buchdicke D in der Höhe eingestellt. Gleichwohl können auch andere Antriebsmittel Verwendung finden, wie Stellmotoren mit einstellbarer Kraftbegrenzung für die Höheneinstellung oder Hubmagneten für das taktgemäße Absenken und Heben.

## Patentansprüche

1. Vorrichtung zum Drehen von mit einer Fördereinrichtung (3) flach aufliegend transportierten Buchblocks, Büchern (6) o. dgl. Druckprodukten,
- mit einer zwischen Förderriemen (3 a) der Fördereinrichtung (3) vor und zurück verfahrbaren, ein jeweiliges Druckprodukt (6) mittig erfassenden Klemm-Dreh-Einheit (7) zum wahlweisen Drehen um eine vertikale Achse, bestehend aus
- einem unteren, vertikal verfahrbaren, das Druckprodukt (6) von der Fördereinrichtung (3) abhebenden Drehteller (8),
- und einem oberen, auf Produktdicke (D) einstellbaren Dreh-Druckstempel (9), **dadurch gekennzeichnet,**
- **dass** zum Einspannen des Druckprodukts (6) der Dreh-Druckstempel (9) von einem eine definierte Druckkraft aufbringenden, ersten Antriebsmittel (46) taktgemäß senk- und hebbar ist,
- **dass** zur Einstellung der Produktdicke (D) der mittels erstem Antriebsmittel (46) abgesenkte Dreh-Druckstempel (9) von einem zweiten Antriebsmittel (48) gegen ein auf der Fördereinrichtung (3) aufliegendes Referenz-Druckprodukt bewegbar ist und die sich **dadurch** am zweiten Antriebsmittel (48) ergebene Antriebsstellung festsetzbar ist.

2. Vorrichtung nach Anspruch 1, **dadurch gekennzeichnet, dass** zum Einspannen des Druckprodukts (6) der Drehteller (8) einen Hub (h₁) relativ zur Fördereinrichtung (3) von ca. 5 mm vollführt.

3. Vorrichtung nach Anspruch 1 oder 2, **dadurch gekennzeichnet, dass** die Druckkraft des ersten Antriebsmittels (46) zum Einspannen des Druckprodukts (6) einstellbar ist.

4. Vorrichtung nach einem der Ansprüche 1 bis 3, **dadurch gekennzeichnet, dass** das erste Antriebsmittel ein Pneumatikzylinder (46) ist und einen Hub (h₂) von 5 bis 30 mm ausführt.

5. Vorrichtung nach einem der Ansprüche 1 bis 4, **dadurch gekennzeichnet, dass** die Druckkraft des zweiten Antriebsmittels (48) gegen das Referenz-Druckprodukt kleiner ist als die Druckkraft des ersten Antriebsmittels (46).

6. Vorrichtung nach einem der Ansprüche 1 bis 5, **dadurch gekennzeichnet, dass** das zweite Antriebsmittel ein Stellmotor mit einstellbarer Kraftbegrenzung ist.

7. Vorrichtung nach einem der Ansprüche 1 bis 5, **dadurch gekennzeichnet, dass** das zweite Antriebsmittel ein Pneumatikzylinder (48) ist mit einer Feststelleinheit (48 a) zur kraftschlüssigen Fixierung der längsverschiebbaren Kolbenstange, wobei die Haltekraft der Feststelleinheit (48 a) größer ist als Druckkraft des ersten Antriebsmittels (46).

8. Vorrichtung nach einem der Ansprüche 1 bis 7, **dadurch gekennzeichnet, dass** die Klemm-Dreh-Einheit (7) zumindest bei der Übernahme und/oder bei der Abgabe des Druckprodukts (6) im Wesentlichen synchron zur Fördereinrichtung (3) angetrieben ist.

9. Vorrichtung nach einem der Ansprüche 1 bis 8, **gekennzeichnet durch** einen ortsfest angeordneten, über einen in Richtung der Vor- und Rückbewegung (R) verlaufenden Zahnriemen (24) mit der Klemm-Dreh-Einheit (7) antriebsverbundenen Servomotor (25), wobei die **durch** die Vor- und Rückbewegung (R) der Klemm-Dreh-Einheit (7) zwangsweise erzeugte Drehbewegung **durch** eine im Servomotor (25) überlagerte Komplementärbewegung kompensiert wird.

## Claims

1. A device for turning book blocks, books (6) or similar printed products that are transported by and flatly lie on a conveyor device (3),
- with a clamping-turning unit (7) that can be displaced backward and forward between conveyor belts (3 a) of the conveyor device (3) and centrally takes hold of one respective printed product (6) to be selectively turned about a vertical axis, consisting of
- a lower, vertically displaceable rotary plate (8) that lifts the printed product (6) off the conveyor device (3)
- and an upper rotary thrust plate (9) that can be adjusted to the product thickness (D),
**characterized in**
- **that** the rotary thrust plate (9) can be lowered and raised in a cyclic fashion by a first driving means (46) that generates a defined force of pressure in order to grip the printed product (6), and in
- **that** the rotary thrust plate (9) lowered by the first driving means (46) can be moved against a reference printed product lying on the conveyor device (3) by a second driving means (48) and the thusly resulting operating position on the second driving means (48) can be fixed in order to adjust the product thickness (D).

2. The device according to Claim 1, **characterized in that** the rotary plate (8) carries out a stroke (h₁) of about 5 mm relative to the conveyor device (3) in order to grip the printed product (6).

3. The device according to Claim 1 or 2, **characterized in that** the force of pressure of the first driving means (46) for gripping the printed product (6) is adjustable.

4. The device according to one of Claims 1 to 3, **characterized in that** the first driving means is a pneumatic cylinder (46) and carries out a stroke (h₂) of 5 to 30 mm.

5. The device according to one of Claims 1 to 4, **characterized in that** the force of pressure of the second driving means (48) against the reference printed product is lower than the force of pressure of the first driving means (46).

6. The device according to one of Claims 1 to 5, **characterized in that** the second driving means is a servomotor with adjustable force limit.

7. The device according to one of Claims 1 to 5, **characterized in that** the second driving means is a pneumatic cylinder (48) with a fixing unit (48 a) for non-positively fixing the longitudinally displaceable piston rod, wherein the holding force of the fixing unit (48 a) is greater than the force of pressure of the first driving means (46).

8. The device according to one of Claims 1 to 7, **characterized in that** the clamping-turning unit (7) is essentially driven synchronous with the conveyor device (3) at least during the acceptance and/or during the delivery of the printed product (6).

9. The device according to one of Claims 1 to 8, **characterized in** a stationarily arranged servomotor (25) that is connected to and driven by the clamping-turning unit (7) via a toothed belt (24) extending in the direction of the backward and forward motion (R), wherein the rotary motion that inevitably results from the backward and forward motion (R) of the clamping-turning unit (7) is compensated with a complimentary motion superimposed in the servomotor (25).

## Revendications

1. Dispositif destiné à tourner des blocs de livres, des livres (6) ou des produits d'impression analogues transportés par un système de convoyage (3),
- avec une unité de serrage/rotation (7) déplaçable en avant et en arrière entre des courroies de transport (3a) du système de convoyage (3) saisissant par son milieu un produit d'impression (6) pour la rotation au choix autour d'un axe vertical, composé
- d'un plateau tournant (8) inférieur, déplaçable à la verticale, relevant le produit d'impression (6) du système de convoyage (3),
- et d'un poinçon de rotation/de pression (9) réglable en fonction de l'épaisseur du produit (D),
**caractérisé en ce que**
- pour le serrage du produit d'impression (6), le poinçon de rotation/de pression (9) peut être abaissé et relevé en cadence par un premier moyen d'entraînement (46) appliquant une force de pression définie,
- **en ce que** pour le réglage de l'épaisseur du produit (D) le poinçon de rotation/de pression (9) abaissé au moyen du premier moyen d'entraînement (46) est déplaçable par un deuxième moyen d'entraînement (48) contre un produit d'impression de référence reposant sur le système de convoyage (3) et **en ce que** de ce fait la position d'entraînement qui en résulte sur le deuxième moyen d'entraînement (48) peut être fixée.

2. Dispositif selon la revendication 1, **caractérisé en ce que** pour le serrage du produit d'impression (6), le plateau tournant (8) effectue une levée (h1) d'env. 5 mm par rapport au système de convoyage (3).

3. Dispositif selon la revendication 1 ou 2, **caractérisé en ce que** la force de pression du premier moyen d'entraînement (46) est réglable pour le serrage du produit d'impression (6).

4. Dispositif selon l'une quelconque des revendications 1 à 3, **caractérisé en ce que** le premier moyen d'entraînement est un vérin pneumatique (46) et effectue une levée (h2) de 5 à 30 mm.

5. Dispositif selon l'une quelconque des revendications 1 à 4, **caractérisé en ce que** la force de pression (48) contre le produit d'impression de référence est inférieure à la force de pression du premier moyen d'entraînement (46).

6. Dispositif selon l'une quelconque des revendications 1 à 5, **caractérisé en ce que** le deuxième moyen d'entraînement est un moteur de positionnement avec un limitation de force réglable.

7. Dispositif selon l'une quelconque des revendications 1 à 5, **caractérisé en ce que** le deuxième moyen d'entraînement est un vérin pneumatique (48) avec une unité de blocage (48a) pour la fixation par complémentarité de force de la tige de piston déplaçable en longueur, la force de maintien de l'unité de blocage (48a) étant supérieure à la force de pression du premier moyen d'entraînement (46).

8. Dispositif selon l'une quelconque des revendications 1 à 7, **caractérisé en ce qu'**au moins lors de la reprise et/ou de la restitution du produit d'impression (6), l'unité de serrage/rotation (7) est entraînée de façon sensiblement synchrone au dispositif de convoyage (3).

9. Dispositif selon l'une quelconque des revendications 1 à 8, **caractérisé par** un servomoteur (25) disposé de façon stationnaire, relié en entraînement avec l'unité de serrage/rotation (7) par une courroie dentée (24) s'étendant sur une direction du déplacement en avant et en arrière (R), le déplacement en rotation obligatoirement généré par le déplacement en avant et en arrière (R) de l'unité de serrage/rotation (7) étant compensé par un déplacement complémentaire superposé dans le servomoteur (25).
